# EUROPÄISCHE PATENTSCHRIFT

(11) **EP 1 530 852 B1**
(45) Veröffentlichungstag und Bekanntmachung des Hinweises auf die Patenterteilung: **07.11.2007**
(21) Anmeldenummer: 03792380.2
(22) Anmeldetag: 19.08.2003
(51) Int. Cl.: H04L 12/56

(54) **VERTEILUNGSFÄCHER FÜR EINE EFFIZIENTE, AUSFALLSICHERE VERKEHRSVERTEILUNG IN EINEM PAKETNETZ**
DISTRIBUTION COMPARTMENTS FOR AN EFFICIENT AND FAILSAFE TRAFFIC DISTRIBUTION IN A PACKET-SWITCHED NETWORK
COMPARTIMENTS DE REPARTITION POUR UNE REPARTITION DU TRAFIC EFFICACE ET SURE EN CAS DE DEFAILLANCE DANS UN RESEAU A COMMUTATION DE PAQUETS

(30) Priorität: 21.08.2002 DE 10238290
(43) Veröffentlichungstag der Anmeldung: 18.05.2005
(73) Patentinhaber: SIEMENS AKTIENGESELLSCHAFT, 80333 München (DE)
(72) Erfinder: LE COZANNET, Gonéri, F-76000 Rouen (FR); ANDRIEU, Jeremie, 81549 München (DE); KIRSTÄDTER, Andreas, 85560 Ebersberg (DE)
(86) Internationale Anmeldenummer: PCT/EP2003/009190
(87) Internationale Veröffentlichungsnummer: WO 2004/019564

(56) Entgegenhaltungen:
- EP-A- 1 035 751
- WO-A-01/54448
- WO-A-02/15521
- LIN Y-D ET AL: "QOS ROUTING GRANULARITY IN MPLS NETWORKS" IEEE COMMUNICATIONS MAGAZINE, IEEE SERVICE CENTER. PISCATAWAY, N.J, US, Bd. 40, Nr. 6, Juni 2002 (2002-06), Seiten 58-65, XP001123512 ISSN: 0163-6804

## Beschreibung

Die Erfindung betrifft ein Verfahren zur Festlegung eines Verteilungsfächers in einem Paketnetz für Paketverkehr mit demselben Ausgangsknoten im Sinne einer effizienten, ausfallsicheren Verkehrsverteilung.

Gegenwärtig ist ein zentrales Ziel der Weiterentwicklung von Paketnetzen Echtzeitdienste über Paketnetze anbieten zu können. Die Entwicklungsaufgaben umfassen Aspekte der Vermittlungstechnik, Netzwerktechnik und Internettechnologie.

Herkömmlich werden Paketnetze vor allem für die Übertragung von zeitunkritischen Daten wie z.B. Filetransfer oder elektronische Mail verwendet. Ziel neuerer Entwicklungen ist es, auch Dienste mit Echtzeitanforderungen wie z.B. Telefonie, die herkömmlich über leitungsvermittelte Netzwerke abgewickelt wird, und Videoinformationen zu übertragen.

Diese beabsichtigte Erweiterung des Dienstespektrums involviert entsprechende Anforderungen an die Übertragungsqualität. Für Dienste mit Echtzeitübertragung müssen bestimmte Qualitätsparameter, z.B. Grenzen für die Verzögerung und für den Verlust von Datenpaketen, eingehalten werden. In der Fachliteratur spricht man in diesem Zusammenhang häufig von Quality of Service, abgekürzt QoS, Parametern bzw. Anforderungen.

Die am weitesten verbreitete Paketnetztechnologie, die auf dem IP (Internet Protocol) Protokoll basiert, sieht herkömmlich bei der Übertragung von Paketen nur ein Best-effort-Routing vor. Pakete werden von Punkt zu Punkt bzw. von Router zu Router übertragen, wobei der jeweilige Router nur Lokal eine Entscheidung über die Weiterübertragung der Pakete zum nächsten Router entscheidet. In der Internetterminologie spricht man von einzelnen Hops. Im Rahmen dieses Best-effort-Verfahrens lassen sich keine Quality-of-Service-Parameter garantieren. Es ist keine entsprechende Kontrolle der Verzögerungszeiten oder der Paketverlustrate vorgesehen. Diese beiden Parameter können erhebliche Werte annehmen, z.B. wenn es zu Engpässen bei einzelnen Routern bzw. auf einzelnen Links kommt. Ein solches Konzept wird z.B. in Dokument EP 1 035 751 (Lucent Technologies) 13.09.2000, offenbart.

Eine Vorgehensweise bei Paketnetzen, um die für die Quality-of-Service-Niveau-Übertragung notwendige Kontrolle zu gewährleisten, ist die Reservierung von Pfaden von Ende zu Ende bzw. von Host zu Host. Verfahren, die mit Pfadreservierung arbeiten, sind beispielsweise das ATM (Asynchrones Transfer Mode) Verfahren oder für IP-Netze das MPLS (Multi Protocol Label Switching) Verfahren. Die Reservierung von vollständigen Pfaden hat den Nachteil hoher Komplexität, geringer Flexibilität und schlechter Ressourcen-Ausnutzung. Deshalb wurden für das IP-Netz andere Verfahren entwickelt, die zumindest teilweise die Flexibilität des ursprünglichen IP-Konzeptes mit Best-effort bewahren. Ein solcher Ansatz ist das DIFF-Serve-Konzept (Differentiated Services Konzept), bei dem Pakete bei Eintritt in ein Teilnetz priorisiert werden und innerhalb des Teilnetzes entsprechend ihrer Priorisierung behandelt werden. Letztlich führt dieser Ansatz aber nicht zu echten Quality-of-Service-Garantien, sondern nur zur Einführung von Class-of-Service-Kategorien.

Die Erfindung hat zur Aufgabe, Datenübertragung mit Quality-of-Service-Garantien über ein Paketnetz zu ermöglichen, wobei Nachteile herkömmlicher Verfahren vermieden werden.

Die Aufgabe wird gelöst durch ein Verfahren nach Anspruch 1.

Der Ausgangspunkt für das erfindungsgemäße Verfahren ist das folgende Konzept für Netze mit Quality-of-Service-Datenübertragung. Eine effiziente Übertragung von Datenpake-ten, die für eine Quality-of-Service-Übertragung notwendige Grenzen für Verzögerungszeiten und Verlustraten respektiert, lässt sich durch eine strikte Kontrolle des Verkehrsaufkommens in einem Netz verbunden mit einer flexiblen Verteilung des Verkehrs innerhalb des Netzes erreichen. Im Zentrum der folgenden Ausführungen steht die effiziente Verteilung von Datenpaketen innerhalb eines Paketnetzes für das das gesamte Verkehrsaufkommen durch Zulässigkeitsüberprüfungen an den Netzrändern beschränkt werden kann.

Es sei ein Paketnetz mit Knoten (beispielsweise gebildet durch Router) gegeben. Weiter seien die Knoten mit Hilfe von physikalischen Verbindungen - im Folgenden als Verbindungsabschnitte bezeichnet, vernetzt. Erfindungsgemäß wird angegeben, wie Paketverkehr innerhalb des Netzes so verteilt werden kann, dass Engpässe oder Beeinträchtigungen durch den Ausfall von Übertragungsabschnitten weitgehend vermieden werden.

Für die Beschreibung der Erfindung werden im Folgenden einige Begriffe eingeführt bzw. definiert. Im Rahmen des Konzeptes für die Garantie von Qualitätskriterien bei der Übertragung von Datenpaketen über ein Paketnetz mit Hilfe von Zulässigkeitskontrollen und Verkehrsverteilung werden Datenpakete mit dem selben Eingangs- und Ausgangsknoten zusammengefasst. Im Folgenden wird die Gesamtheit solcher Pakete als Flow bezeichnet, d.h. ein Flow ist gegeben durch die Datenpakete, die zwischen dem selben Eingangs- und Ausgangspunkt des Netzes über beliebige Pfade innerhalb des Netzes übertragen werden. Diese Definition unterscheidet sich von der üblichen Definition von Flow, bei der die Übertragung von Endpunkt zu Endpunkt, d.h. z.B. von Host zu Host oder von Endgerät zu Endgerät betrachtet wird. Verteilfächer werden pro Flow definiert und umfassen die Gesamtheit der möglichen Wege von Datenpaketen eines Flows. Es ist sinnvoll, möglichst eine Reihe von verschiedenen Pfaden für Pakete eines Flows zuzulassen, um Flexibilität zu gewährleisten. Es kann abschnittweise zudem mit Gewichten gearbeitet werden, um bestimmte Pfade bzw. bestimmte Verbindungsabschnitte bei der Verkehrsverteilung stärker zu gewichten, beispielsweise weil dort eine höhere Übertragungskapazität zur Verfügung steht. Um die Verteilfächer näher zu charakterisieren , wird der Begriff "Link" verwendet. Ein Verteilfächer besteht dann aus einer Vielzahl von (logischen) Links. Ein (logischer) Link bezeichnet einen (physikalischen) Verbindungsabschnitt, über den der zugehörige Verteilfächer des Links Datenpakete übertragen kann. Im Gegensatz zu den (physikalischen) Verbindungsabschnitten wird den (logischen) Links eine Richtung zugeordnet, die angibt, in welcher Richtung der Verteilungsfächer des Links Datenpakete über den Verbindungsabschnitt übertragen kann.

Erfindungsgemäß werden Netzknoten in Abhängigkeit eines Ausgangsknoten für Flows klassifiziert. Die Klasse bestimmt sich aus der minimalen Anzahl der Hops bzw. der Verbindungsabschnitte zwischen dem jeweiligen Knoten und dem Ausgangsknoten. Die Bestimmung der minimalen Anzahl an Hops kann beispielsweise für IP-Netze mit Hilfe von durch Routingprotokolle wie SPF oder OSPF ausgetauschte Topologieinformationen erfolgen. Netzknoten, die den selben Abstand im Sinne von der minimalen Anzahl an Hops zu dem Ausgangsknoten haben, gehören zu der selben Klasse. Im Folgenden wird der Einfachheit halber von Netzknoten der Klasse N gesprochen, wobei N eine natürliche Zahl ist und die minimale Anzahl an Hops zudem Ausgangsknoten bezeichnet. Von Knoten der Klasse N können nun Links zu Knoten der Klasse N-1, d.h. in Richtung des Ausgangsknoten geführt werden. Um eine möglichst große Vielfalt von Wegen zu haben, ist es sinnvoll, für einen Knoten der Klasse N > 1 für alle Verbindungsabschnitte zu knoten der Klasse N-1 logische Links einzuführen. Die so eingeführten logischen Links führen immer von Knoten einer Klasse mit einer größeren minimalen Anzahl an Hops (Klasse N) zu einer Klasse mit einer um 1 geringeren minimalen Anzahl an Hops (Klasse N-1). Die so definierten Links beinhalten folglich keine Schleifen. Zudem ist es noch möglich, innerhalb einer Klasse logische Links einzuführen, wobei auf Schleifenfreiheit geachtet werden sollte. Neben der Schleifenfreiheit ist auf folgende zwei Aspekte bei der Einführung von logischen Links innerhalb einer Klasse Rücksicht zu nehmen: Es sollten alle Knoten nach Möglichkeit viele ausgehende Links aufweisen, um Alternativen bei Störfällen zu haben. Deswegen sollte die untere Grenze der Anzahl von ausgehenden Links für eine Klasse möglichst groß sein. Der andere Aspekt ist, dass innerhalb einer Klasse möglichst viele Links festgelegt werden sollten, um die Anzahl der Wegalternativen zu optimieren, wobei auf Schleifenfreiheit innerhalb der Klasse zu achten ist.

Durch die Einführung von Klassen und die Definition von Links von Knoten der jeweils höheren Klasse zur niedrigeren Klasse wird ein Gerüst für Flow-bezogene Verteilungsfächer festgelegt, das durch Links innerhalb der einzelnen Klassen ergänzt werden kann. Wesentliche Vorteile sind Effizienz und Schleifenfreiheit. Die erfindungsgemäße Verkehrsverteilung konzentriert sich auf Links zwischen Klassen. Bei der Verwendung von der Anzahl der Hops als Metrik minimierte das Routing von höheren zu niedrigeren Klassen den Weg der Datenpakete. Das Routing bzw. die Verteilung innerhalb von Klassen kann auf - ein Minimum beschränkt werden. Dadurch sind möglichst kurze Pfade und folglich ein effizientes Routing sichergestellt. Das Routing von höheren Klassen zu niedrigeren Klassen von Knoten ist unidirektional. Schleifen, die Knoten von mehr als einer Klasse umfassen, sind bei diesem Routing ausgeschlossen. Das Problem, Schleifenfreiheit im Gesamtnetz herzustellen, reduziert sich auf eine Linkfestsetzung innerhalb von Klassen von Knoten, bei der Schleifenbildung innerhalb der Klasse vermieden werden muss. Das ursprüngliche Problem ist damit auf ein Problem eines erheblich geringeren Komplexitätsgrades abgebildet.

Für eine schleifenfreie Festlegung von Links innerhalb einer Klasse kann man wie folgt vorgehen:
- Die Knoten der Klasse werden entsprechend der Anzahl an ausgehenden Links bzw. bei Knoten mit derselben Anzahl an ausgehenden Links entsprechend der Kapazität der eingehenden Links in eine Reihenfolge gebracht.
- Wenigstens für einen Teil der Knoten werden entsprechend des Reihenfolge für jeden Knoten die folgenden Schritte durchgeführt:
   -- Von dem jeweiligen Knoten wird der kürzeste Pfad zu der Menge der Knoten der Klasse, die um 1 geringer ist, identifiziert, wobei Pfade über die ausgehende Links, die direkt zu Knoten der Klasse N-1 führen, nicht betrachtet werden. Durch die Identifikation des kürzesten Pfades wird Verkehrsverteilung innerhalb der Klasse minimiert, d.h. für ein effizientes Routing gesorgt. Bei mehreren Pfaden mit minimalen Anstand zu der nächst niedrigen Klasse können alle auf Schleifenfreiheit untersucht werden.
   -- Wenn ein identifizierter Pfad nicht zu einer Schleife innerhalb der Knoten der Klasse führt, wird der Link über den ersten Verbindungsabschnitt des identifizierten Pfades als Link in Verteilungsfächer aufgenommen. Im Falle von mehreren identifizierten Pfaden kann bei Schleifenfreiheit einer ausgewählt werden oder auch eine Festlegung von mehr als einem Link für den betrachteten Knoten vorgenommen werden.

Die erfindungsgemäße Festlegung von Verteilungsfächern hat den Vorteil einer großen Flexibilität und geringen Störanfälligkeit. Der erfindungsgemäß festgelegte Verteilungsfächer bezieht sich erst einmal lediglich auf einen Ausgangsknoten (egress node). Aus dem Verteilungsfächer kann eine Verkehrsverteilung für alle Flows, die über den Ausgangsknoten übertragen werden, abgeleitet werden, indem eine Auswahl von Links des Verteilungsfächers durchgeführt wird. Beispielsweise wird für einen Flow der Eingangsknoten (ingress node) in die Klassifizierung mit einbezogen. Die Gesamtheit der Pfade von dem Eingangknoten des Flows zu dem Ausgangsknoten, die über Links des Verteilungsfächers führen, definiert eine Untermenge der Links des Verteilungsfächers, die wiederum einen Verteilungsfächer für den betrachteten Flow festlegen. Die Routingtabellen der Router des Paketnetzes können nun nach Maßgabe der Verteilungsfächer für Flows eingerichtet werden. Das Routing bzw. die Weitervermittlung von Datenpaketen innerhalb des Paketnetzes erfolgt dann nach Maßgabe des Verteilungsfächers für den zugehörigen Flow. Ein Flow kann über mehrere Pfade des zugehörigen Verteilungsfächers verteilt werden, um eine ausgeglichene Verkehrsverteilung zu gewährleisten. Diese Verteilung kann z.B. nach Maßgabe von Verbindungszugehörigkeit von Paketen bzw. entsprechend der Ziel- und Ursprungsadresse des Paketes erfolgen. Datenübertragung mit QoS Niveau ist realisierbar, indem man das gesamte Verkehrsaufkommen des Netzes beschränkt und durch die erfindungsgemäße Verkehrsaufteilung
- Verzögerungen vermeidet durch Konzentration auf Routing von höheren Klassen zu niedrigeren Klassen und
- Verkehrsspitzen (und damit Engpässe) durch Verkehrsverteilung und Alternativpfade vermeidet.

Die Verkehrsverteilung kann dynamisch anhand der aktuellen Verkehrswerte vorgenommen werden, wobei der Verteilungsfächer so konzipiert ist, dass jeder einzelne Knoten möglichst Alternativen für die Weiterleitung von Datenpaketen eines Flows hat.

Die vorgestellte Klassifizierung nach Maßgabe eines Ausgangsknoten kann für alle Flows, die das Paketnetz bei dem Ausgangsknoten verlassen, zur Reaktion auf Linkausfälle verwendet werden. Da in der Umgebung des Ausgangsknoten bezüglich der Wegevielfalt ein Engpass auftritt, ist es sinnvoll, die Klassifizierung zumindest für Knoten in der Umgebung des Ausgangsknoten durchzuführen. Für eine Anwendung bei beliebigen die betrachteten Flows betreffenden Linkausfällen ist eine Klassifizierung aller Knoten, über die zu Flows mit dem betrachteten Ausgangsknoten gehöriger Verkehr geführt wird, bzw. eine Klassifizierung aller Knoten des Datennetzes zweckdienlich. Das Verfahren bzw. die Klassifizierung kann für alle Ausgangsknoten und damit für alle möglichen Flows vorgenommen werden.

Bei Ausfall eines ausgehenden Linkes eines erfindungsgemäß klassifizierten Knoten kann auf folgende Weise reagiert werden: Für den Fall, dass der Knoten zwei oder mehr ausgehende Links aufweist, kann der Verkehr, der normal über den ausgefallenen Links geleitet würde, über den bzw. über die anderen Links des Knoten verteilt werden. Wenn der einzige ausgehende Link eines Knotens ausfällt, kann die Richtung der auf den Knoten zugehenden Links, die bei Knoten der selben Klasse Ihren Ausgangspunkt haben, invertiert werden. Bei Ausfall des einzigen ausgehenden Links eines Knotens der keine auf ihn zuführenden Links von Knoten der selben Klasse hat, können alle auf ihn zuführenden Links anderer Klassen, d.h. für einen Link der Klasse N in der Regel die Links zu Knoten der Klasse N+1 invertiert werden.

Wenn die Ausfallszeit einen bestimmten Grenzwert überschreitet, kann eine Neubestimmung der Klasse des Knotens mit dem ausgefallenen Links durchgeführt werden.

Im Folgenden wird die Erfindung im Rahmen von Ausführungsbeispielen anhand von Figuren näher erläutert. Es zeigen:
- Figur 1: Netzabschnitt mit erfindungsgemäßer Klassifizierung von Knoten
- Figur 2: Festlegung von Links zwischen Knoten verschiedener Klassen
- Figur 3: Festlegung von Links zwischen Knoten derselben Klasse
- Figur 4: Illustration der Engstelle nahe eines Ausgangsknotens
- Figur 5: Reaktion auf Linkausfall durch Verkehrsumleitung über alternative ausgehende Links
- Figur 6: Reaktion auf ausfallenden Link durch Invertierung eines eingehenden Links der selben Klasse
- Figur 7: Reaktion auf Linkausfall durch Invertierung von Links zu Knoten anderer Klassen
- Figur 8: Reaktion auf Linkausfall durch Neuklassifizierung des Knotens.

Für einen Ausgangsknoten wird ein Verteilungsfächer, der alle Knoten des Netzes umfasst, auf folgende Weise konstruiert: Für alle Knoten wird der Abstand in der minimalen Anzahl von Hops gemessen, die zu dem Ausgangsknoten führen. Die Anzahl der Hops bestimmt dann die Klassenzugehörigkeit. Für jeden Knoten einer Klasse N werden dann auf allen Verbindungsabschnitten zwischen dem Knoten und Knoten der Klasse N-1 Links festgelegt, die zu den Knoten der Klasse N-1 führen. Die Bestimmung von Knoten innerhalb einer Klasse erfolgt in folgenden Schritten. Zuerst werden die Knoten einer Klasse nach der Anzahl der von dem Knoten ausgehenden Links und der Kapazität der eingehenden Links geordnet. Bei dieser Einordnung werden Links in der Reihenfolge der Anzahl der ausgehenden Links betrachtet, wobei ausgehend von Knoten mit weniger ausgehenden Links zu Knoten mit mehr ausgehenden Links vorgegangen wird. Bei Knoten, die die selbe Anzahl von ausgehenden Links haben, werden die zuerst betrachtet, die eine höhere Kapazität der eingehenden Links haben. Falls die Kapazität der eingehenden Links nicht bekannt ist, kann auch alternativ die Anzahl der eingehenden Links betrachtet werden. In dieser Reihenfolge werden für die Knoten einer Klasse N Links innerhalb der Klasse festgesetzt. Die Schritte sind dann:
1. Wähle einen Knoten der Klasse N entsprechend der oben definierten Reihenfolge.
2. Identifiziere den kürzesten Pfad zu der Menge der Knoten der Klasse, die um 1 geringer ist, wobei der Pfad nicht über die ausgehenden Links, die direkt zu Knoten der Klasse N-1 führen, führen darf.
3. Wenn dieser Pfad nicht zu einer Schleife innerhalb der Knoten der Klasse N führt, wird der Link über den ersten Verbindungsabschnitt des identifizierten Pfades als Link in den Verteilungsfächer aufgenommen.
4. Danach wird der nächste Knoten der Klasse N in der oben definierten Reihenfolge betrachtet.

Auf diese Weise wird eine möglichst große Zahl von Links innerhalb einer Klasse eingeführt, die die beiden Bedingungen Schleifenfreiheit und eine möglichst kleine untere Grenze für die minimale Anzahl ausgehender Links erfüllt.

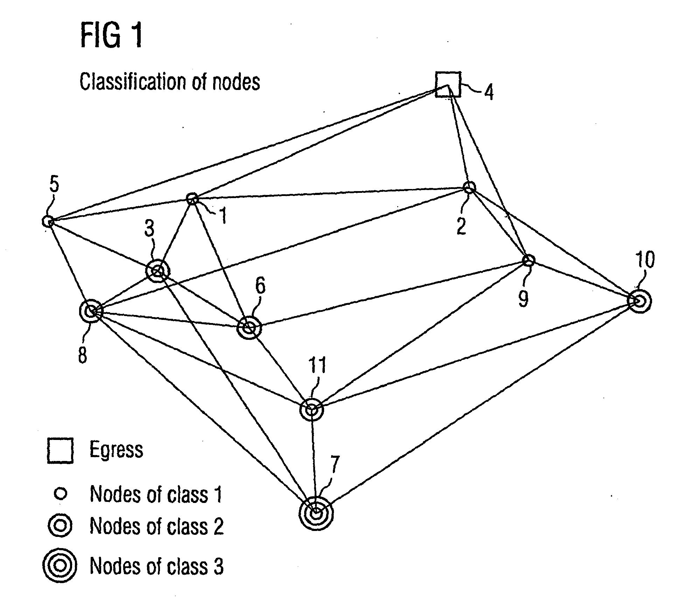

Figur 1 zeigt beispielhaft 11 Knoten eines Netzes, für die eine erfindungsgemäße Klassifizierung vorgenommen wird. Der Ausgangsknoten ist durch ein Viereck gekennzeichnet. Knoten der Klasse 1 sind durch einen Kreis, Knoten der Klasse 2 durch einen Doppelkreis und Knoten der Klasse 3 durch einen dreifachen Kreis dargestellt. Verbindungsabschnitte zwischen den Knoten sind durch durchgezogene Linien gekennzeichnet.

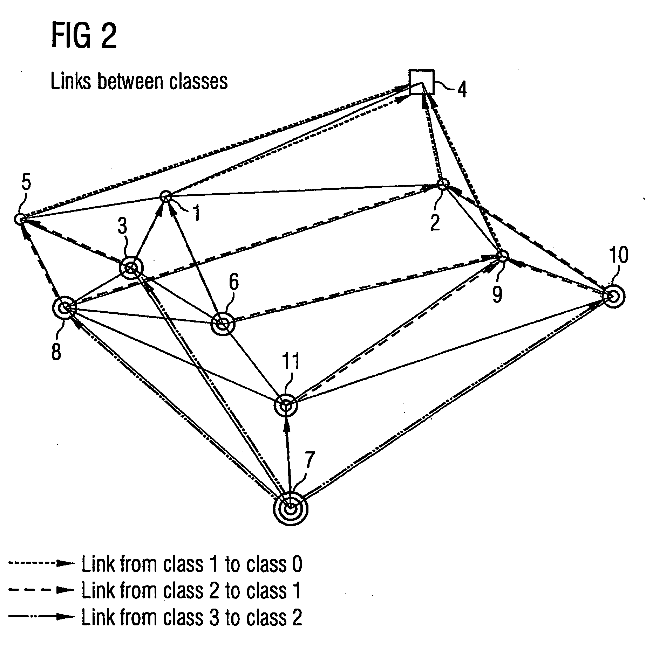

Figur 2 zeigt die Einführung von Links zwischen Knoten verschiedener Klassen, die Links von Klasse 1 zu Klasse 0 sind durch eine gepunktete Linie und die Richtung durch eine Pfeilspitze dargestellt. Es bestehen folgende Links zwischen Klasse 1 und 0:
- Von Knoten 5 zu Knoten 4
- Von Konten 1 zu Knoten 4
- Von Knoten 2 zu Knoten 4
- Von Knoten 9 zu Knoten 4.

Links von der Klasse 2 zu der Klasse 1 sind durch eine gestrichelte Linie dargestellt und ihre Richtung durch Pfeilspitzen. Es bestehen folgende Links der Klasse 2 zur Klasse 1:
- Von Knoten 8 zu Knoten 5
- Von Knoten 3 zu Knoten 5
- Von Knoten 3 zu Knoten 1
- Von Knoten 6 zu Knoten 1
- Von Knoten 6 zu Knoten 9
- Von Knoten 11 zu Knoten 9
- Von Knoten 10 zu Knoten 9
- Von Knoten 10 zu Knoten 2.

Schließlich sind durch eine Linie, wo sich Striche und Punkte abwechseln, und durch Pfeilspitzen die Links von der Klasse 3 zur 2 gekennzeichnet. Es handelt sich um folgende Links:
- Von Knoten 7 zu Knoten 8
- Von Knoten 7 zu Knoten 3
- Von Knoten 7 zu Knoten 10.

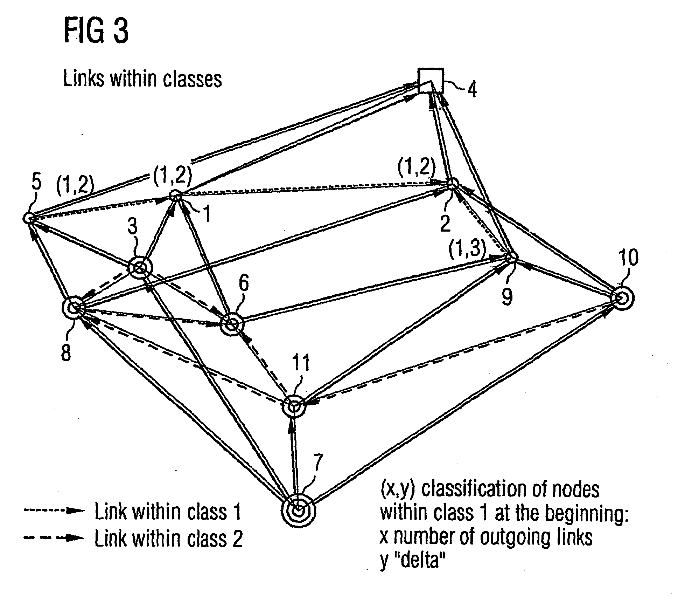

Figur 3 zeigt, wie Links innerhalb von Klassen festgelegt werden entsprechend der oben beschriebenen Methode. Links innerhalb der Klasse 1 sind durch gepunktete Pfeile und Links innerhalb der Klasse 2 durch gestrichelte Pfeile gekennzeichnet. Die Links innerhalb der Klasse 1 umfassen:
- Von Knoten 5 zu Knoten 1
- Von Knoten 1 zu Knoten 2
- Von Knoten 9 zu Knoten 2.

Die Links innerhalb der Klasse 2 umfassen:
- Von Knoten 10 zu Knoten 11
- Von Knoten 11 zu Knoten 6
- Von Knoten 11 zu Knoten 8
- Von Knoten 3 zu Knoten 6
- Von Knoten 3 zu Knoten 8.

Links zwischen verschiedenen Klassen sind in der Figur 3 durch durchgezogene Pfeile gekennzeichnet.

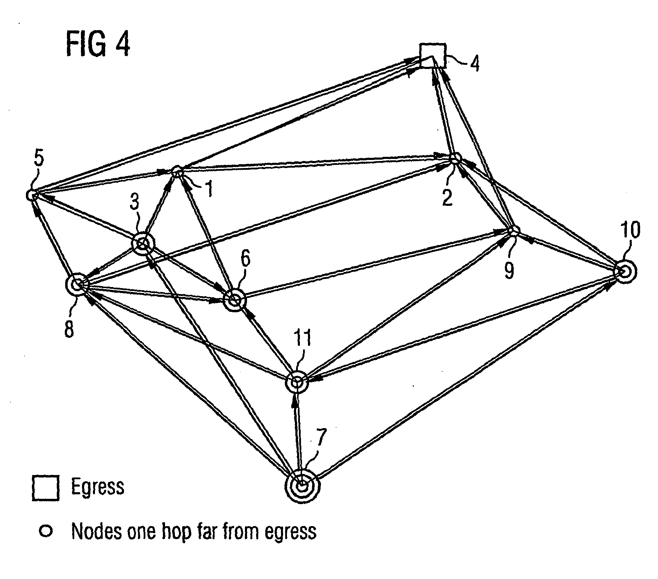

In Figur 4 sind alle Links durch durchgezogene Pfeile gekennzeichnet. Nahe dem Ausgangsknoten 4 gibt es topologisch bedingt einen gewissen Engpass, denn der Wegefächer führt für alle Wege auf den selben Endpunkt, den Ausgangsknoten hin. So ist es beispielsweise leicht zu sehen, dass für einen schleifenfreien Wegefächer ein Knoten mit nur einem ausgehenden Link existiert. Denn hätten alle Knoten der Klasse 1 einen zweiten ausgehenden Link zu einem anderen Knoten der Klasse 1, ergäbe sich eine Schleife. In Figur 4 ist das der Knoten 2, der nur einen ausgehenden Link aufweist.

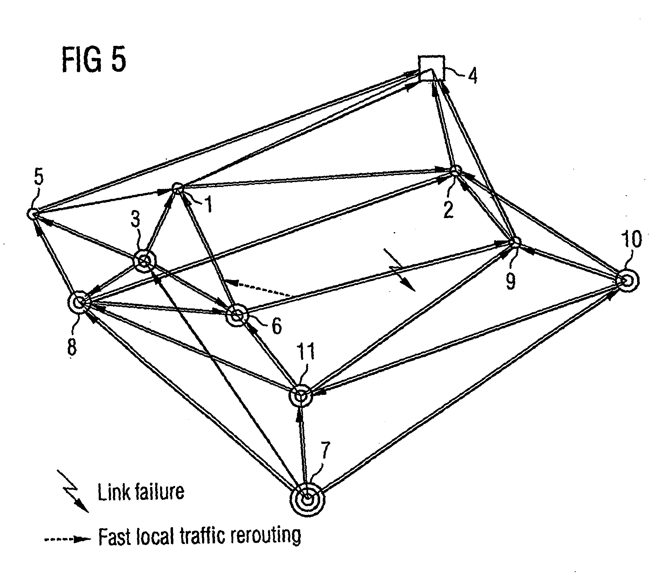

Die Figuren 5 bis 8 zeigen nun erfindungsgemäß vorgesehene Reaktionen auf den Ausfall eines Links.

In Figur 5 ist der Links zwischen den Knoten 6 und 9 ausgefallen. Wie durch einen gepunkteten Pfeil angedeutet, wird der Verkehr der normal zwischen den Knoten 6 und 9 übertragen worden wäre, nun über den Links von Knoten 6 nach Knoten 1 geführt.

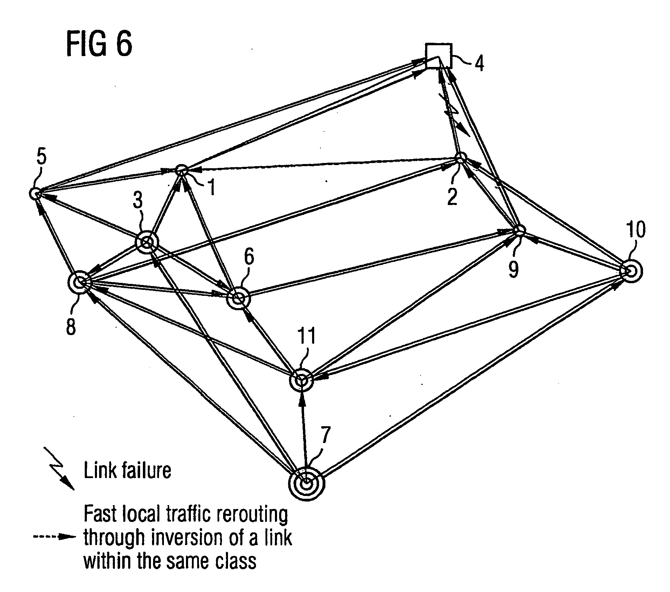

In Figur 6 ist der einzige ausgehende Link von Knoten 2 zu Knoten 4 gestört. Als Reaktion - durch gepunktete Pfeile dargestellt - werden Links zu Knoten der selben Klasse invertiert und dadurch zu ausgehenden Links. Der Link von Knoten 1 zu Knoten 2 und der Link von Knoten 9 zu Knoten 2 wird die Richtung umgedreht.

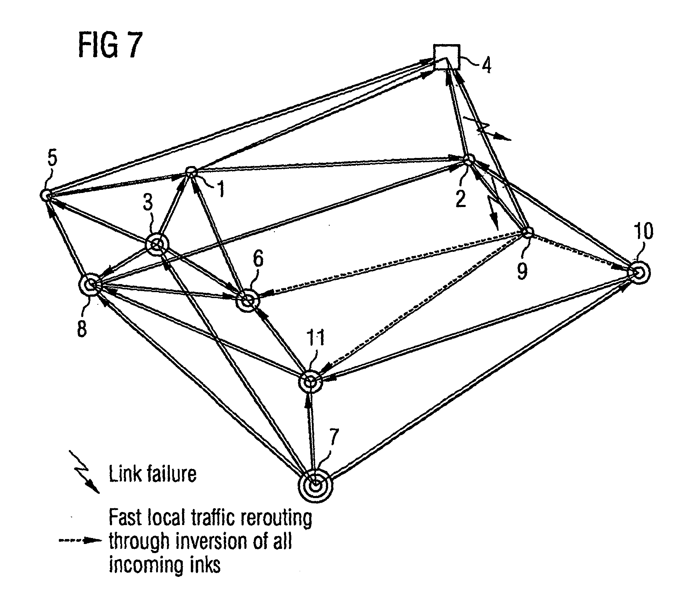

In Figur 7 sind die Links zwischen Knoten 9 und Knoten 2 und zwischen Knoten 9 und Knoten 4 ausgefallen. Knoten 9 hat damit keine ausgehenden Links mehr und besitzt auch keine ankommenden Links von Knoten der selben Klasse. Als Reaktion werden sämtliche eingehenden Links von Knoten einer höheren Klasse invertiert. Es handelt sich um die Links von Knoten 6 zu Knoten 9, von Knoten 11 zu Knoten 9 und von Knoten 10 zu Knoten 9.

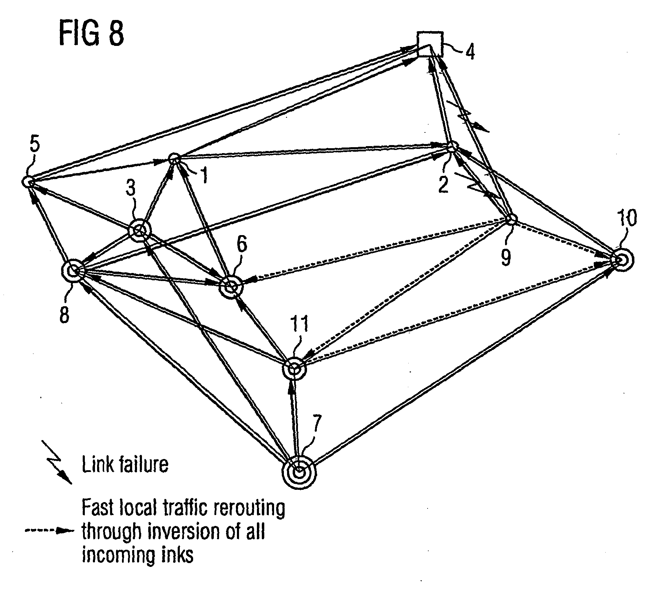

Figur 8 schließlich zeigt den selben Störungsfall wie Figur 7, wobei aufgrund der Dauer der Störung eine neue Klassifizierung des Knotens 9 stattgefunden hat. Knoten 9 ist nun statt der Klasse 1 als ein Knoten der Klasse 3 eingeordnet. Die gepunktete Pfeile beschreiben nun die im Vergleich zum ungestörten Fall geänderte Verkehrsführung aufgrund der neuen Klassifikation des Knotens 9.

## Patentansprüche

1. Verfahren zur Festlegung eines Verteilungsfächers für die Verteilung von Verkehr über verschiedene Pfade in einem Paketnetz, das mit Knoten und Verbindungsabschnitten gebildet ist, für Paketverkehr mit demselben Ausgangsknoten, bei dem
- Netzknoten in Klassen eingeteilt werden,
- sich die Klassen nach der minimalen Anzahl der Hops zwischen den Netzknoten und dem Ausgangsknoten bestimmen, wobei Netzknoten mit demselben minimalen Anzahl an Hops zu derselben Klasse gehören, **dadurch gekennzeichnet** daβ
- von jedem Knoten einer Klasse wenigstens ein Link zu einem Knoten der Klasse mit einer um eins niedrigeren Anzahl an Hops geführt wird.

2. Verfahren nach Anspruch 1,
**dadurch gekennzeichnet,**
- **dass** von jedem Knoten einer Klasse entlang jedes Verbindungsabschnittes zu einem Knoten einer Klasse mit einer um eins niedrigeren Anzahl an Hops ein Link geführt wird.

3. Verfahren nach einer der vorhergehenden Ansprüche,
**dadurch gekennzeichnet,**
- **dass** für wenigstens einen Knoten einer Klasse, den ein Verbindungsabschnitt mit einem Knoten derselben Klasse verbindet, wenigstens ein Link zwischen dem Knoten und einem Knoten derselben Klasse festgelegt wird.

4. Verfahren nach Anspruch 3,
**dadurch gekennzeichnet,**
- **dass** auf Verbindungsabschnitten zwischen Knoten einer Klasse Links festgelegt werden, wobei die Festlegung
-- nach Maßgabe einer Maximierung der Zahl der ausgehenden logischen Links für den bzw. die Knoten der Klasse mit der geringsten Anzahl an ausgehenden Links und
-- nach maßgabe von Schleifenfreiheit bezüglich der Links zwischen Knoten der Klasse erfolgt.

5. Verfahren nach Anspruch 4,
**dadurch gekennzeichnet,**
- **dass** für Knoten der Klasse die Knoten entsprechend der Anzahl an ausgehenden Links und gleicher Anzahl an ausgehenden Links bei Knoten entsprechend der Kapazität der eingehenden Links in eine Reihenfolge gebracht werden,
- **dass** wenigstens für einen Teil der Knoten entsprechend ihrer Reihenfolge für jeden Knoten die folgenden Schritte durchgeführt werden:
-- von dem Knoten wird der kürzeste Pfad zu der Menge der Knoten der Klasse, die um 1 geringer ist, identifiziert, wobei Pfade über die ausgehenden Links, die direkt zu Knoten der Klasse N-1 führen, nicht betrachtet werden, und
-- wenn ein identifizierter Pfad nicht zu einer Schleife innerhalb der Knoten der Klasse führt, wird der Link über den ersten Verbindungsabschnitt des identifizierten Pfades als Link in den Verteilungsfächer aufgenommen.

6. Verfahren nach einem der vorhergehende Ansprüche,
**dadurch gekennzeichnet,**
- **dass** bei einem Knoten, der einer Klasse zugeordnet ist und der wenigstens zwei ausgehende Links hat, bei Ausfall einer der ausgehenden Links der über diesen Link zu leitende Verkehr auf den anderen ausgehenden Link bzw. auf die anderen ausgehenden Links verteilt wird.

7. Verfahren nach einem der vorhergehende Ansprüche,
**dadurch gekennzeichnet,**
- **dass** bei einem Knoten, der einer Klasse zugeordnet ist und der einen ausgehenden Link hat, bei Ausfall dieses ausgehenden Links
-- die Richtung aller auf ihn zugehenden Links, die bei Knoten derselben Klasse ihren Ursprung nehmen, invertiert werden, und
-- für den Fall, dass keine auf ihn zugehenden Links, die bei Knoten derselben Klasse ihren Ursprung nehmen, existieren, alle auf ihn zugehenden Links invertiert werden.

8. Verfahren nach einem der vorhergehende Ansprüche,
**dadurch gekennzeichnet;**
- **dass** bei Ausfall eines ausgehenden Links eines in eine Klasse eingeteilten Knoten die Klasse des Knotens neu festgesetzt wird, wenn die Dauer des Ausfalls einen Grenzwert übersteigt.

## Claims

1. Method for defining a distribution fan-out for the distribution of traffic via different paths in a packet network formed of nodes and connection sections for packet traffic having the same egress node, wherein
- network nodes are subdivided into classes, and
- the classes are determined according to the minimum number of hops between the network nodes and the egress node, network nodes with the same minimum number of hops belonging to the same class,
**characterised in that**
- from each node of a class at least one link is routed to a node of the class having one fewer hop.

2. Method according to claim 1,
**characterised in that**,
- from each node of a class a link is routed along each connection section to a node of the class having one fewer hop.

3. Method according to one of the preceding claims,
**characterised in that**,
- for at least one node of a class which is connected by a connection section to a node of the same class, at least one link between the node and a node of the same class is defined.

4. Method according to claim 3,
**characterised in that**,
- links are defined on connection sections between nodes of a class, said links being defined
-- according to a maximisation of the number of outgoing logical links for the node(s) of the class having the least number of outgoing links and
-- according to link freedom in respect of the links between nodes of the class.

5. Method according to claim 4,
**characterised in that**,
- for nodes of the class, the nodes are sequenced according to the number of outgoing links and, if nodes have the same number of outgoing links, according to the capacity of the incoming links,
- for at least some of the nodes, the following steps are performed for each node depending on their sequence:
-- the shortest path from the node to the set of nodes of the class which is fewer by one is identified, paths via outgoing links leading directly to nodes of the class N-1 being disregarded, and
-- if an identified path does not lead to a loop within the nodes of the class, the link via the first connection section of the identified path is incorporated into the distribution fan-out as a link.

6. Method according to one of the preceding claims,
**characterised in that**,
- in the case of a node which is assigned to a class and which has at least two outgoing links, in the event of failure of one of the outgoing links, the traffic to be routed via this link is distributed onto the other outgoing link or links.

7. Method according to one of the preceding claims,
**characterised in that**,
- in the case of a node which is assigned to a class and which has one outgoing link, in the event of failure of said outgoing link
-- the directions of all the links coming into it and originating at nodes of the same class are inverted, and
-- should no links coming into it and originating at nodes of the same class exist, all the links coming into it are inverted.

8. Method according to one of the preceding claims,
**characterised in that**,
- in the event of failure of an outgoing link of a node assigned to a class, the class of the node is redefined if the duration of the failure exceeds a limit value.

## Revendications

1. Procédé pour définir un éventail de distribution pour la distribution de trafic sur différents chemins dans un réseau de paquets, qui est constitué de noeuds et de sections de liaisons, pour un trafic de paquets avec le même noeud de sortie, dans lequel
- des noeuds de réseau sont répartis en classes,
- les classes se définissent selon le nombre minimal de sauts entre les noeuds de réseau et le noeud de sortie, des noeuds de réseau avec le même nombre minimal de sauts appartenant à la même classe,
**caractérisé en ce qu'**au moins un lien va de chaque noeud d'une classe vers un noeud de la classe avec un nombre de sauts inférieur de un.

2. Procédé selon la revendication 1, **caractérisé en ce qu'**un lien va de chaque noeud d'une classe le long de chaque section de liaison vers un noeud d'une classe avec un nombre de sauts inférieur de un.

3. Procédé selon l'une des revendications précédentes, **caractérisé en ce que**, pour au moins un noeud d'une classe qu'une section de liaison relie à un noeud de la même classe, au moins un lien est défini entre le noeud et un noeud de la même classe.

4. Procédé selon la revendication 3, **caractérisé en ce que** des liens sont définis sur des sections de liaisons entre des noeuds d'une classe, la définition se faisant
- en fonction d'une maximisation du nombre des liens logiques sortants pour le resp. pour les noeuds de la classe avec le plus petit nombre de liens sortants et
- en fonction de l'absence de boucles relativement aux liens entre noeuds de la classe.

5. Procédé selon la revendication 4, **caractérisé en ce que**
- pour des noeuds de la classe, les noeuds sont mis dans un ordre selon le nombre de liens sortants et le même nombre de liens sortants dans le cas de noeuds selon la capacité des liens entrants dans le cas de noeuds de la classe,
- au moins pour une partie des noeuds, on exécute, pour chaque noeud, selon leur ordre, les étapes suivantes:
■ le noeud identifie le chemin le plus court vers l'ensemble des noeuds de la classe qui est inférieure de 1, des chemins passant par les liens sortants qui mènent directement à des noeuds de la classe N-1 n'étant pas pris en considération, et,
■ si un chemin identifié ne conduit pas à une boucle dans les noeuds de la classe, le lien passant par la première section de liaison du chemin identifié est admis en tant que lien dans l'éventail de distribution.

6. Procédé selon l'une des revendications précédentes, **caractérisé en ce que**, étant donné un noeud affecté à une classe et ayant au moins deux liens sortants, en cas de défaillance de l'un des liens sortants, le trafic à diriger via ce lien est distribué sur l'autre lien sortant resp. sur les autres liens sortants.

7. Procédé selon l'une des revendications précédentes, **caractérisé en ce que**, étant donné un noeud affecté à une classe et ayant un lien sortant, en cas de défaillance de ce lien sortant,
- il y a inversion du sens de tous les liens menant à lui qui ont leur source au niveau de noeuds de la même classe et
- dans le cas où il n'y a pas de liens menant à lui qui ont leur source au niveau de noeuds de la même classe, il y a inversion de tous les liens menant à lui.

8. Procédé selon l'une des revendications précédentes, **caractérisé en ce que**, en cas de défaillance d'un lien sortant d'un noeud réparti dans une classe, la classe du noeud est redéfinie si la durée de la défaillance dépasse une valeur limite.
